# EUROPÄISCHE PATENTANMELDUNG

(11) **EP 0 911 756 A2**
(43) Veröffentlichungstag der Anmeldung: **28.04.1999**
(21) Anmeldenummer: 98119789.0
(22) Anmeldetag: 22.10.1998
(51) Int. Cl.: G06K 19/04

(54) **Vorrichtung zur maschinenlesbaren Kennzeichnung von Textilien**

(30) Priorität: 24.10.1997 DE 19747153
(71) Anmelder: BSH Bosch und Siemens Hausgeräte GmbH, 81669 München (DE)
(72) Erfinder: Wöbkemeier, Martina, Dr.-Ing., 10789 Berlin (DE)

(57) **Zusammenfassung**

Dem zu kennzeichnenden Textilstück (1) ist ein Transponder (5) zugeordnet, in dem Informationen über das Textilstück (1) gespeichert sind. Der Transponder (5) zeichnet sich dadurch aus, daß er die Gestalt eines am zu kennzeichnenden Textilstück (1) üblicherweise befestigten festen Gegenstandes annimmt. Diese kann beispielsweise ein Verschlußelement wie ein Knopf (3) beziehungsweise ein Druckknopf sein. Dem Transponder (5) kann auch die Form eines Verzierungselementes gegeben werden. Der auf diese Weise ausgebildete Transponder (5) läßt sich am Textilstück (1) befestigen, ohne als für den Verbraucher "artfremder" Gegenstand am Textilstück (1) unangenehm aufzufallen und so das äußere Erscheinungsbild des Textilstückes (1) zu beeinträchtigen. Ferner kann ein als Knopf (3) ausgebildeter Transponder (5) einen am Textilstück (1) ohnehin zu befestigenden Knopf ersetzen und somit Material und Fertigungsaufwand einsparen.

## Beschreibung

Die vorliegende Erfindung betrifft eine Vorrichtung zur maschinenlesbaren Kennzeichnung von Textilien mittels eines Transponders für die Behandlung von Textilien durch Haushaltsgeräte.

Transponder sind elektronische Einrichtungen, die unter Einwirkung von bestimmten elektromagnetischen Sendesignalen ansprechen und das Sendesignal frequenzspezifisch belasten oder in frequenzspezifischer Weise auf das Sendesignal mit einem eigenen Antwortsignal antworten. Dabei übertragen sie dieses als gespeicherte Informationen geformte Spezifikum auf Empfänger, die im allgemeinen Bestandteil der Sendeeinrichtung sind.

Transponder werden bereits verwendet, um Textilien maschinenlesbar zu kennzeichnen. Dies findet jedoch bei der Automatisierung ihrer Fertigung Anwendung. Hierbei werden die Transponder als kleiner fester Gegenstand vorübergehend an den Textilien befestigt und führen die innerbetriebliche Logistik, damit die Textilien auf ihrem Weg durch die Fertigung immer an die gerade zutreffenden Bearbeitungsstationen gefördert werden.

Andere Kennzeichnungen von Textilien enthalten Bearbeitungshinweise für den Endgebraucher und werden als Stoffstreifen einfach angenäht.

Der vorliegenden Erfindung liegt deshalb die Aufgabe zugrunde, eine Vorrichtung zur maschinenlesbaren Kennzeichnung von Textilien durch Transponder zu schaffen, die Hinweise für die Behandlung von Textilien durch Haushaltsgeräte enthalten und eine einfache und sichere Kennzeichnung der Textilien ermöglichen ohne dabei das äußere Erscheinungsbild des Textilstückes zu beeinträchtigen oder auch nur gering zu beeinträchtigen.

Diese Aufgabe wird durch die Merkmale des Anspruchs 1 gelöst.

Erfindungsgemäß weist der Transponder die Gestalt eines am zu kennzeichnenden Textilstück üblicherweise befestigten festen Gegenstandes auf.

Insbesondere kann der Transponder die Form eines Verschlußelementes, wie beispielsweise eines Knopfes bzw. eines Druckknopfes aufweisen. Damit ist es möglich, den Transponder auf dieselbe Weise am Textilstück zu befestigen, wie der nachgebildete Gegenstand. Besonders vorteilhaft ist es, wenn der Transponder an die Stelle des nachgebildeten Gegenstandes tritt, da er dann auch dessen Funktion erfüllen kann und kein zusätzlicher Gegenstand befestigt werden muß, der möglicherweise optisch stören würde. So kann der Tansponder als Knopf ausgebildet sein, der dann beispielsweise anstelle eines anderen Knopfes an einem Hemd einfach und sicher angenäht werden kann. Auf diese Weise kann außerdem, insbesondere wenn der Transponder die Form eines ohnehin am Textilstück zu befestigenden Gegenstandes annimmt, der Fertigungsaufwand verringert werden.

Der Transponder kann auch die Form eines Verzierungselementes annehmen, das zusätzlich am Textilstück befestigt werden kann, ohne notwendigerweise einen anderen Gegenstand zu ersetzen. Dies ergibt auch in diesem Fall einen optischen Vorteil, da am Textilstück keine für den Verbraucher "artfremden" Gegenstände befestigt werden.

Ferner ist es vorteilhaft, wenn der Transponder mit Befestigungseinrichtungen ausgestattet ist, die eine einfache und sichere Befestigung am Textilstück ermöglichen. Dies kann beispielsweise durch Klemmen am Stoff und durch Hineinstecken geschehen. Ferner ist es auch denkbar, den Transponder in das Gewebe einzuclipsen. Eine besonders sichere Befestigung am Textilstück wird erzielt, wenn die Befestigungseinrichtung durch den Stoff hindurchgesteckt und auf der anderen Seite des Stoffes mit einem Gegenstück verbunden wird. Zusätzlich kann dieses Gegenstück arretiert werden oder selbständig verriegeln, so daß es fest mit der Befestigungseinrichtung verbunden ist.

Die Befestigungseinrichtungen können auch Öffnungen sein, die ein einfaches Annähen am Textilstück ermöglichen, oder auch andere Ausbildungen wie Furchen oder Vorsprünge, die einem Faden Halt geben. Die Befestigung durch Annähen ist zum einen an die Art von Textilien angepaßt und somit besonders sicher und zum anderen sind die zum Annähen erforderlichen Gegenstände - Nadel und Faden - in jedem Haushalt vorhanden.

Die Erleichterung der Befestigung des Transponders führt zu einer Kosten- und Zeitersparnis und ist notwendige Bedingung bei Verwendung durch den Endgebraucher, der in der Regel nicht mit kompliziertem Werkzeug zur artfremden Befestigung von Transpondern an Textilstücken ausgestattet ist.

Weitere Einzelheiten, Merkmale und Vorteile der vorliegenden Erfindung ergeben sich aus der nachfolgenden Beschreibung einer bevorzugten Ausführungsform der Erfindung unter Bezugnahme auf die Zeichnungen.

Darin zeigen
Fig. 1 eine Vorderansicht des zu kennzeichnenden Textilstückes, und
Fig. 2 eine perspektivische Ansicht eines erfindungsgemäßen Transponders.

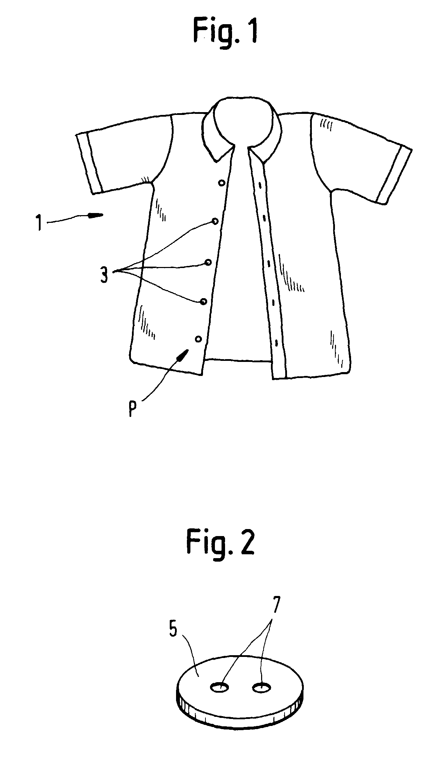

In der in Fig. 1 und 2 dargestellten Ausführungsform ist ein Transponder 5 gezeigt, der zur Kennzeichnung eines Hemdes 1 verwendet wird, an dem zum Verschließen vom in einer Reihe angeordnete Knöpfe 3 angenäht sind. Der Transponder 5 enthält in gespeicherter Form Informationen über das Hemd 1, wie beispielsweise Angaben zum Gewebe, zur Farbe, zur Temperaturbeständigkeit. Ferner speichert der Transponder 5 Daten zur optimalen Waschbehandlung des Hemdes 1 wie beispielsweise empfohlene Waschtemperatur, Waschdauer, Waschmechanik oder Schleuderfestigkeit, etc.

Der Transponder 5 weist zwei Öffnungen 7 auf und hat die Form eines gewöhnlichen Knopfes. Zur Befestigung am Hemd 1 wird er anstelle eines am Hemd 1 angenähten Knopfes 3 am Hemd angenäht. Bevorzugterweise wird er anstelle des untersten Knopfes 3 angenäht, wie durch den Pfeil P gekennzeichnet.

Somit wird durch die erfindungsgemäße Lösung eine Vorrichtung zur Kennzeichnung eines Textilstückes mit einem Transponder für die Behandlung von Textilien durch Haushaltsgeräte geschaffen, wobei der Transponder sich einfach und sicher am Textilstück befestigen läßt, ohne nachteilig aufzufallen.

## Patentansprüche

1. Vorrichtung zur maschinenlesbaren Kennzeichnung von Textilien mit einem dem zu kennzeichnenden Textilstück zugeordneten Transponder für die Behandlung von Textilien durch Haushaltsgeräte, in dem Informationen über das Textilstück gespeichert sind, **dadurch gekennzeichnet**, daß der Transponder (5) die Gestalt eines am zu kennzeichnenden Textilstück (1) üblicherweise befestigten festen Gegenstandes aufweist.

2. Vorrichtung nach Anspruch 1, dadurch gekennzeichnet, daß der Transponder (5) die Gestalt eines Verschlußelementes, insbesondere eines Knopfes oder Druckknopfes, aufweist.

3. Vorrichtung nach Anspruch 1, dadurch gekennzeichnet, daß der Transponder (5) die Gestalt eines Verzierungsgegenstandes aufweist.

4. Vorrichtung nach einem der Ansprüche 1 bis 3, dadurch gekennzeichnet, daß der Transponder (5) mit Einrichtungen zu seiner Befestigung am zu kennzeichnenden Textilstück versehen ist.

5. Vorrichtung nach Anspruch 4, dadurch gekennzeichnet, daß die Befestigungseinrichtungen am Textilstück durch Klemmen befestigt werden.

6. Vorrichtung nach Anspruch 4, dadurch gekennzeichnet, daß die Befestigungseinrichtungen durch den Stoff des Textilstückes hindurchgesteckt werden.

7. Vorrichtung nach Anspruch 6, dadurch gekennzeichnet, daß die Befestigungseinrichtungen auf der gegenüberliegenden Seite des Stoffes mit einem Gegenstück zusammenwirken.

8. Vorrichtung nach Anspruch 4, dadurch gekennzeichnet, daß die Befestigungseinrichtungen einem Faden Halt geben und der Transponder an dem Textilstück durch Annähen befestigt wird.
